# EUROPEAN PATENT SPECIFICATION

(11) **EP 0 978 036 B1**
(45) Date of publication and mention of the grant of the patent: **21.11.2001**
(21) Application number: 97932960.4
(22) Date of filing: 07.08.1997
(51) Int. Cl.: G06F 9/46, G06F 1/00

(54) **ISOLATED EXECUTION LOCATION**
ISOLIERTER AUSFÜHRUNGSORT
LIEU ISOLE D'EXECUTION

(30) Priority: 09.08.1996 GB 9616783; 24.02.1997 GB 9703773
(43) Date of publication of application: 09.02.2000
(73) Proprietor: Citrix Systems (Research and Development) Limited, High Wycombe Buckinghamshire HP11 1JU (GB)
(72) Inventor: BULL, John Albert, NNorthants NN7 4HY (GB); OTWAY, David John, Cambridge CB1 2AQ (GB); KRAMER, Andre, Cambridge CB3 4BJ (GB)
(74) Representative: Dummett, Thomas Ian Peter
(86) International application number: IB9700973
(87) International publication number: WO9808163

(56) References cited:
- EP-A- 0 658 848
- VITEK J ET AL: "Security and communication in mobile object systems" , MOBILE OBJECT SYSTEMS. TOWARDS THE PROGRAMMABLE INTERNET. SECOND INTERNATIONAL WORKSHOP, MOS '96. SELECTED PRESENTATIONS AND INVITED PAPERS, MOBILE OBJECT SYSTEMS. TOWARD THE PROGRAMMABLE INTERNET. SECOND INTERNATIONAL WORKSHOP, MOS'96, LINZ, AUSTRIA , ISBN 3-540-62852-5, 1997, BERLIN, GERMANY, SPRINGER-VERLAG, GERMANY, PAGE(S) 177 - 199 XP002046184 see page 181, line 1 - page 182, line 17 see page 188, line 1 - line 21 see page 190, line 13 - line 18
- DEAN D ET AL: "Java security: from HotJava to Netscape and beyond" , PROCEEDINGS 1996 IEEE SYMPOSIUM ON SECURITY AND PRIVACY (CAT. NO.96CB35924), PROCEEDINGS 1996 IEEE SYMPOSIUM ON SECURITY AND PRIVACY, OAKLAND, CA, USA, 6-8 MAY 1996 , ISBN 0-8186-7417-2, 1996, LOS ALAMITOS, CA, USA, IEEE COMPUT. SOC. PRESS, USA, PAGE(S) 190 - 200 XP000634844 see abstract; figure 4
- ABRAMS M D ET AL: "TRUSTED SYSTEM CONCEPTS" COMPUTERS & SECURITY INTERNATIONAL JOURNAL DEVOTED TO THE STUDY OF TECHNICAL AND FINANCIAL ASPECTS OF COMPUTER SECURITY, vol. 14, no. 1, 1 January 1995, pages 45-56, XP000497494
- ROUAIX F: "A Web navigator with applets in Caml" COMPUTER NETWORKS AND ISDN SYSTEMS, vol. 28, no. 11, May 1996, page 1365-1371 XP004018234

## Description

The present invention relates to a method and apparatus, notably to a method for selectively directing portions of an incoming stream of data from an external source to a selected location at which program components within that incoming stream can be interpreted and executed. This reduces the risk of corruption or damage to data or programs held in an end user network of computer systems by mobile program components imported into that system from an external source. The invention also enables large program components in the incoming data stream to be interpreted and executed on a specific server and thus reduce the load on the processors in the downstream end user computer system. This will reduce the need for large processing capacity individual terminals in that down-stream system. The invention also relates to a computer system programmed or modified to operate using the method of the invention.

### BACKGROUND TO THE INVENTION:

The user of a stand alone or networked computer system, both hereinafter collectively called an end user system, often has a need to import data or whole programs or parts of programs, hereinafter collectively and individually called program components, from an external source to enable the end user system to operate in a desired manner. The term program component is used herein to denote material which is interpreted by a computer system to operate the system in a specific manner, whereas data is the information material upon which the computer system acts under the direction of the program components.

Users, particularly banks and other financial institutions, need to be able to inspect incoming program components and data to ensure that those components will not corrupt or otherwise adversely affect the data and operating programs held in their end user systems. This is particularly important where there are a number of computer systems operating within a network and in which the network or computer systems within that network have a number of points at which access to external data and program sources can be made.

Where the system is a closed network and the data or program components are provided from other units within the same network, the user can satisfy himself that the data and program components do not contain material which could adversely interact with the data and programs held on his particular unit of the network. Such satisfaction will typically involve the inspection of the computer listings upon which the program is based to ensure that there are no errors or adverse components within the program. However, where the program or program component being imported is large and complex, such inspection and verification becomes excessively time consuming and expensive and therefore impractical.

Where the end user network or stand alone system is to receive data or program components from a source which is external to the network, for example from the Internet or an external data base, the risk of deliberate or accidental introduction of program components which can adversely interact with the data or programs already held in that end user system is increased.

Since the external data source may be operating under one or more large and complex programs, which are themselves under continual updating and revision, it is effectively impossible to inspect each program and every modification of the program to ascertain that the end user system will not import adversely acting material.

There are a number of forms of program components which can cause corruption or damage to data or programs held in an end user system and/or can cause other deleterious effects when imported into the end user system. Such program components include those which are deliberately designed to corrupt the data or operating programs of the end user system; those which collect confidential data from the end user system and transmit that data to an external location without the end user being aware that such unauthorized transmission or theft of data is taking place; and programs which deny the user full and proper use of the end user system, for example by introducing repeating closed loop operations which consume the computing capacity of the end user system or deny access to areas of the end user system. Such program components are known as viruses, zappers, hostile Applets, Trojan Horses and service deniers and will be generically denoted as viruses hereinafter. A widespread concern is the deliberate distribution of such virus programs or program components into an end user system where they are executed and adversely interact with or cause disruption to the proper operation of the system. Such viruses may not be intentionally damaging, but may be capable of causing damage and/or economic loss inadvertently. Whilst an end user can repeatedly inspect data and programs within a closed network to detect such viruses, the end user cannot inspect the external data or program source for such viruses and must accept the risk that any import of data or program components from an external source may import viruses into his system.

In order to reduce the risk of importing material from an external source which could adversely interact with an end user system, it is commonplace to screen all incoming data and programs or program components to identify the source of that material. Only material from specified sources is permitted access into the end user system. The end user can satisfy himself that such sources provide data and/or programs which have been inspected either by the end user or by the source. Alternatively, the user can base his confidence in the source of material on its reputation for accuracy in compiling programs and for reducing the presence of possible adversely acting program components in any program components it makes available to end users. Such screens are known in the computer field as firewalls and act uni-directionally on a communications hardware level to allow incoming material to pass if it comes from a specified communication address or to destroy incoming material if it does not come from a specified source.

However, a firewall prevents access by the operator of an end user system to data and programs which are from non-specified sources. This restricts the freedom of the user to access alternative sources until they have been inspected and authorized. Furthermore, where the external source is operating under a large or complex program, such inspection is not practical and any authorization of access to that external source may destroy the integrity of the end user system.

These problems are aggravated where there are many points in the end user system from which external sources of data and programs can be accessed. It has been proposed to limit the number of such access points in an end user system and to ensure that all incoming material is fully screened at the permitted access points. This can be done by diverting the incoming material to a location, for example one known as a web proxy, at which the system manager can inspect it before it is passed to the end user system. However, this can lead to excessive bottle necks in the operation of the system and delays in accessing the external source from any given end user computer system in a network. Furthermore, inspection of the incoming material may not identify program elements which, whilst intended to operate benignly, could operate errantly. These are often passed direct to the end user system, bypassing the web proxy, where they are implemented with potentially deleterious effect. Additionally, where acceptance of incoming data is based upon identification of the source of such data as an accepted source, this places undue trust in the integrity of that source and its ability to generate material without errors or problems.

It is also common place to provide one or more virus detection programs within an end user system. These operate by recognizing characteristic patterns in the virus program and destroying the virus program before it is executed within the end user system. The detection program may also recognize specific sites in an operating program to which a virus may attach and remain dormant until executed and thus detect when a virus is present by a change in such a site. However, this requires that the detection program recognise specific features or patterns and requires that the virus be imported into the end user system before it can be identified and neutralized. Furthermore, where the virus is one which is not recognized by the virus detection program, for example because it is a new virus or a mutation of an existing one, the virus may not be detected and may be executed within the end user system.

In many applications it is desirable to provide program components from the data source to enhance the execution of programs held within the end user system. For example, many data sources written in the JAVA or JAVASCRIPT languages utilize mobile program components, or Applets. The program components can be included within the stream of data from an external source to enable the end user system to handle the data effectively. For example, the Applet can enable the end user to interact with the external data source in real time to perform a scripted sequence of actions, for example to achieve animation of graphic images upon the end user system video screen from data already held at the end user system. This avoids the need to transmit the data for each image from the external source and thus speeds up the operation of the end user system. Alternatively, such program components are retained at a specific address in the external source and the incoming information stream contains a characteristic flag or other identifier which alerts the end user system that it needs to download a program component from the external source and the address from which that program component should be downloaded. Such program components are hereinafter referred to as being associated with the incoming data stream from the external source. The operator of the end user system downloads the required program component into the end user system where it is implemented.

Such program components are termed mobile since they are intended to be imported into the end user system and to be executed within that system and to interact in a beneficial manner with the data and program components held at the end user system. It is therefore necessary that they should be accepted by the end user system. They therefore pass through any firewall and are not rejected or destroyed by a virus detection program. It has been proposed to sign and seal such program components cryptographically so as to identify the program component as coming from an authorized source, for example one where the components have been individually inspected. However, this requires the end user to place complete trust in the integrity and competence of the organization cryptographically signing and sealing the program components they export.

Where the program or program component imported from the external source is large and complex and/or is constantly being updated, as is the case with network browser programs, it is not possible to provide a high level of confidence in such programs or program components. This may present an acceptable risk to the operator of the end user system when balanced against the advantages that the use of such program components gives.

Furthermore, it is possible that such mobile program components, whilst satisfying the authentification or identified source criteria, can be interpreted incorrectly in the end user system and/or can deliberately or accidentally interact adversely with the data and/or program components already held by the end user system. This raises a problem for the end user operator. On the one hand, the importation of the mobile program components is desirable for the proper operation of the end user system; but they can cause corruption of data and damage to the operating and other programs held by the end user system. The conventional firewall or virus detection programs cannot protect the end user system without preventing proper operation of the system. As stated above, diverting the imported data stream to a holding location, for example the terminal operated by an end user system manager, where any program components in the data stream are inspected to establish that they are acceptable to the end user system before they are passed to the end user system to be implemented, cannot discriminate between wholly benign program components and those which could operate errantly.

The problem of deliberate or accidental errant interaction of desirable mobile program components from an external source has been recognized as a major problem by the computer industry, but no effective solution has yet been proposed.

It has been proposed in VITEK et al, "Security and communication in mobile object systems", MOBILE OBJECT SYSTEMS. TOWARD THE PROGRAMMABLE INTERNET, pages 177 to 199 to provide an end user computer system in which program execution locations are built up from sealed objects. These are given a tag or other means by which they can be identified and passed on as a fresh, deep copy where communication is required. Such a system requires the use of a new specific form of language and cannot be applied to data streams compiled in existing languages. Since the sealed objects containing a mobile program component are passed from one location to another within the end user computer system, errant execution of the program within the sealed object can take place within the end user system. This proposal is concerned with protecting the identity and/or contents of the sealed unit from the end user and not with protecting the end user computer system from errant operation of any mobile program components within the sealed units.

It has been proposed in DEAN D et al, "Java security: from HotJava to Netscape and beyond", PROCEEDINGS 1996 IEEE SYMPOSIUM ON SECURITY AND PRIVACY, pages 190 - 200 to provide the manager of an end user computer system with means for defining an interface for such a system which controls the access of Java Applets to the end user system by identifying components within a data stream held in a component within the end user computer system to determine whether that data stream satisfies pre-determined access requirements. This is carried out within the end user system so that any Applet within that data stream can execute errantly within the end user system.

We have now devised a method and apparatus by which an end user system can be protected from the errant effects of such otherwise desirable mobile program components imported from an external source. The method of the invention can also be used to selectively direct program components from an incoming data stream to a server specifically designated to run that program component or type of component. In this way, large program components can be executed in that server isolated from the remainder of the end user system and the results of that execution transmitted to the end user system. This enables large and complex program components to be executed in a server dedicated to this purpose and avoids the need for the end user to provide large and complex terminals in his end user system capable of executing these program components. Moreover, a plurality of selected program components from the same incoming data stream can be directed to different isolated program execution locations isolated from one another so that the speed and security of handling different types of program components is enhanced. By selecting the server at which a specific type of program component is executed; it is possible to tailor make the operation of that server to the program component it is to execute and thus be more specific in the security measures or policies which that isolated program execution location provides to the end user system.

### SUMMARY OF THE INVENTION:

Accordingly, the present invention provides a computer system comprising:
A. An end user system containing one or more computers programmed to operate in response to an imported data stream from an external source, which data stream has one or more mobile program components contained within or associated with that data stream, and
B. At least one program execution location for executing at least one of the said mobile program components and feeding the results of that execution to one or more of the end user system computers, characterized in that:
   i. the program execution location is selectively isolated from the end user system computer(s); and
   ii. some or all of the mobile program components are fed to and/or retained in one or more of the isolated program execution locations prior to being executed in the isolated program execution location to operate in a desired manner; and
   iii. the isolated program execution location is one in which one or more of the program components are retained and which has one or more interfaces with the external source of the data stream and one or more interfaces with the end user system computer(s), whereby program component(s) within the isolated program execution location can be executed within the isolated program execution location in isolation from the end user system computer(s) to interact with the external source of data and/or data and/or a program held by the end user system computer(s); and
   iv. the operation of the interface(s) between the isolated program execution location and the end user system computer(s) are programmed so that only data which has been interacted on by the program component(s) within the isolated program execution location in a specified and controlled manner and/or program components which operate in a specified manner can be passed to and from the end user system computer(s).

Preferably, the computer system is programmed to screen the incoming data stream to detect mobile program components present in or associated with that data stream and to pass a selected some or all of the detected mobile program components to one or more of the isolated program execution locations.

In a particularly preferred embodiment of the invention, a stand in replacement for the program component in the incoming data stream, known for convenience as a proxy Applet, resides in the end user system and receives and acts on the data from the isolated program execution location. The proxy Applet mimics on the end user system the actions of the isolated selected program component and can be in the form of an accessory to the browser program and can be provided in the same language as the program component that it mimics so that it can be viewed by the browser program as if it were the program component it mimics without the need for extensive modification of the browser.

The isolated program execution location presents the same interfaces to the isolated program component as the end user system presents to the proxy Applet so that the operating environments for the two are substantially identical.
Operating requests made to the interfaces within the isolated program by the isolated program component are transmitted over a communications protocol to the proxy Applet residing in the end user system which re-issues those operating requests to the identical interfaces on the end user system. In this way only a sub-set of the end user interfaces which have been fully inspected and verified are made available to the isolated program execution location and in a controlled manner. The data streams mediating those operating requests can also be screened to detect deviations from a strict, well specified and verified specification.

In the present invention the isolated program execution location can be located upon the same physical site as part or all of the end user system, for example associated with an access gateway to the end user system. Alternatively, it can be located remotely from the downstream remainder of the end user system. Moreover, the isolated program execution location need not be located within the end user system itself, but can be located as a protective isolation screen between the external source of the data and program components and the downstream end user system. For convenience, the term "within the end user system" will be used herein to denote the case where the isolated program execution location is provided within one or more of the computer units of the end user system; and the term "external to the end user system", will be used to denote a computer unit or other means which, whilst it may be located on the same geographic site as the end user system, is isolated from the end user system.

By providing the isolated program execution location isolated from the remainder of the end user system, incoming mobile program components are contained selectively isolated from or within the end user system. Although the program components may operate errantly within the isolated program execution location, they are only permitted to interact with the end user system in a specified and controlled manner, for example via a general utilities interface operating to pass only selected data. Since the program operating the isolated program execution location can be comparatively small, the end user can inspect the program listing for that program to ensure that it fulfils the desired criteria. The operator can thus have a high level of confidence that only data which has been processed in a specified desired manner or a program component which operates in a desired manner can be transmitted from the isolated program execution location to the end user system.
The operating program for the isolated program execution location can also prevent the passage of program components to the end user system from the isolated program execution location, thus minimising the risk of viruses or undesirable program components entering the end user system. In addition, the isolated program execution location can operate to limit access of a program component from the isolated program execution location to specified resources within the end user system, for example to limit access time to the central processor to minimise the effect of a services denial virus, to limit the bandwidth of the communications access, or to limit access to certain disc blocks in the hard disc memory.

The program operating the isolated program execution location can be selectively written so as to permit transmission or reception of data only to or from specific sources within the end user system and/or a specific external source, so that imported program components executed in the isolated program execution location cannot access certain areas of the data base in the end user system. For example, an isolated program execution location could be programmed only to operate on purchase ledger data, another could be programmed to operate only on personnel data. It may therefore be necessary to provide a series of isolated program execution locations, each designed to operate in an individual manner on specified data sources and destinations. This will enable the operating program for each isolated program execution location to be smaller and more specific and hence easier to inspect and verify. Furthermore, it is within the scope of the present invention to provide a number of tiers of isolated program execution locations operating in series with one another so that the incoming data stream is directed to an initial isolated program execution location at which the identities of the program components, their sources and/or their functions can be identified. This initial isolated program execution location can then select the isolated program execution location(s) in the next tier to which specified program components are directed and so on. In this way progressively more stringent security requirements or selection of the appropriate portion of the end user system to utilise the program components from the incoming data stream can be applied as a series of simple steps and/or large program components can be isolated and directed to isolated program execution locations specifically configured to execute those program components.

For convenience, the invention will be described hereinafter in terms of an isolated program execution location programmed to operate with a single external source or destination of data external to the end user system and to transmit or receive data to or from a single destination within the end user system.
However, it will be appreciated that the invention can be applied to isolated program execution locations operating with a plurality of external and/or end user sources and destinations in any combination.

The isolated program execution location is selectively isolated from or within the end user system, that is the isolated program execution location can only receive and transmit data and/or program components in a selective and controlled manner via the interfaces with the external source and the end user system. Thus, the isolated program execution location will typically require a level of intelligence and data storage so that it can accept and store the incoming mobile program components from the external source and can then execute those program components under the control of an operating program already held within the isolated program execution location to interact with data from the external source and/or from the end user system. If desired, the operating program required for the isolated program execution location can be held within the end user system to minimise corruption from external sources, and is transmitted to the isolated program execution location as part of the start up procedure of the end user system. As explained below, several operating programs may be available to the isolated program execution location depending upon the type of data it is to handle and the type of operation to be carried out on that data. The end user or system administrator may be provided with means, for example specific keyboard operations, which load the appropriate operating program to the isolated program execution location where a selection has to be made between various alternatives.

The requisite processing and data storage functions for the isolated program execution location can be provided by one of the computer units within the end user system network or as an isolated portion of one of the computer units, so that the isolated program execution location is located within the end user system. However, with current computer architecture it may not be possible to provide a sufficiently isolated environment in which the program components are executed. It is therefore preferred to provide the isolated program execution location as a separate physical unit selectively isolated from the end user system with which it is to interact and to provide limited access routes or interfaces between the execution unit and the end user system which are operated under the control of the program operating the isolated program execution location unit. This allows conventional firewall and communications protocols to be used to separate the isolated program execution location from the end user system.
Typically, the execution unit will be a conventional computer having its own processor and memory capability.

The invention also provides an isolated program execution location for use in a computer system of the invention, characterized in that it comprises a computer mechanism adapted to act as an isolating interface between an external source of data and program components and the end user computer system which is to receive or transmit data to and from the computer mechanism, which computer mechanism is programmed to divert and/or retain at least a selected some of the program components from said external source to said computer mechanism and to execute those selected program components within the said computer mechanism and to permit transfer of data and/or program components to said end user system which operate or have been operated on in selected and specified manners.

For convenience, the invention will be described hereinafter in terms of a separate computer acting as an isolated program execution location which is physically separate from the end user system, but which is configured as if it were a data import access point to the end user system network.

Whilst the isolated program execution location will preferably transmit only data to and from the rest of the end user system, it may be programmed to permit transmission of program components to the end user system. Since such program units will have been subjected to inspection within the isolated program execution location by a program which the end user has inspected or in which he has a high level of confidence, the risk that such transmitted program components will operate errantly within the end user system is minimised. The isolated program execution location can thus be used to inspect and verify incoming program components which it is desired to download into the end user system and can be used to intercept virus programs before they reach the end user system. Whilst the end user may be confident that specified program components are acceptable, in which case he may feel that they do not need to be inspected within the isolated program execution location and can be passed directly to the end user system, this exposes the end user system to possible errant operation of those program components. It is therefore preferred to elect to pass all program components within or associated with an incoming data stream to the isolated program execution location.

For convenience, the invention will be described hereinafter in terms of the transmission solely of data to the end user system.

As stated above, the isolated program execution location transfers data between the isolated program execution location and the end user system only if it complies to predetermined criteria so that the isolated program execution location regulates the exchange of data to and from the end user system and the isolated program execution location. The operating program required to achieve this and to identify the existence of program components in or associated with the data stream from the external source can be written using conventional programming techniques having regard to the source and destination within the end user system required for the initial data and the resultant processed data. Whilst the program operating the isolated program execution location may be retained and implemented wholly within the isolated program execution location, it is within the scope of the present invention to locate part of that operating program at some other location. Thus, the portion of the program which identifies a program component in the incoming material and diverts that to the isolated program execution location (the snare) may be located at each operating unit of the end user system, for example as part of the browser program, or can be incorporated in the operating program for the firewall(s). However, location of the snare program in the browser program requires that each operating unit in the end user system be provided with the necessary snare program; and that any extension of the end user system or variation of the browser program may require re-programming of the whole end user system to ensure that the snare program is present at all end user operating units. It is therefore preferred to incorporate the snare component for each data stream to be received -from an external data source in the operating program to be operated within the isolated program execution location.

As stated above, a single isolated program execution location can be used to achieve a specified operation upon specified data. However, it is within the scope of the present invention to provide an isolated program execution location which can operate upon several categories of information and/or with data from several sources and/or destinations of information. This may require separate operating programs for the isolated program -execution location to run concurrently or consecutively. Alternatively, separate isolated program execution locations can be provided, each to achieve a specific operation upon specific data. It will also be appreciated that one or more isolated program execution locations can be provided at each point at which the end user system accesses an external data source and that each such access point can have an isolated program execution location which is to operate in a specific manner upon specific data using selected program components from the external data source. The operator of the end user system can thus identify the function and potential sources to be accessed at each access point by selection of the operating program under which the isolated program execution location at that access point operates. This will further regulate the importation of material from external sources to the end user system.

It is also within the scope of the present invention to create zones within a system into which access from other zones of the same system or network is regulated by providing isolated program execution locations at the access points between the zones of the system, one of which is deemed to be the external source of information and the other the end user system of the invention.

Whilst the isolated program execution location of the invention may provide the sole regulation of importation of material into an end user system from an external source, it is preferred to locate the isolated program execution location between two firewalls which inhibit transmission of undesirable program components and/or data from the external source and/or the end user system. Such firewalls can be of conventional form and serve to reduce the load imposed upon the isolated program execution location by providing primary control of the flow of material to and from the end user system. As indicated above, the snare component of the operating program for the isolated program execution location may be incorporated in the operating program for either of both of the firewalls. However, to protect the snare program from external corruption or attack, it is preferred that the snare program is not located on the external source side of the firewall located between the external source and the isolated program execution location.

The invention is of especial application to data sources operating under JAVA or JAVASCRIPT technology which utilise mobile program components or Applets. These are executed by the end user system to customise the application program under which data is to be processed to suit the end user system and to set up the end user system for the receipt of data from the external source. However, the invention is applicable to the interception and storage in the isolated program execution location of program components from other computer languages and operating systems, for example ActiveX, perl, tcl/tk, c, c++ and sh and its variants.

Where a program component within an isolated program execution location has operated in an undesirable manner, the results of that errant operation are retained within the isolated program execution location and are not allowed to be transmitted to the end user system or the external source. The detection of an errant operation within the isolated program execution location can cause the isolated program execution location to close down and re-initialise so as to delete and re-instate all data and program components within the isolated program execution location. If desired, the program component causing the errant operation can be identified for audit purposes to identify the source of the program component. The end user can thus investigate the integrity of the source and take appropriate action regarding importation of further data from that source.

The deletion of material from the isolated program execution location and re-initialisation or other subsequent operations can be carried out using conventional programming techniques.

The isolated program execution location(s) can thus be viewed as sacrificial and can be re-initialised without affecting the remainder of the end user system, thus avoiding major re-programming and data re-instatement which would otherwise be required if the program component had been held within the end user system.

The invention has been described above in terms of an end user system receiving data from an external system which is accessed by a number of other users, that is a public access system or service provider. However, the invention can also be applied to the public access service provider so as to protect the public access data base from corruption by importation of undesirable program components, for example viruses. In this case, the isolated program execution location is provided at some or all of the access points to the service provider in a similar manner to that described above for the end user system.

Furthermore, it is possible to carry out the detection and separation of mobile program components from a data stream with which the mobile program components are to interact at source. Those program components can then be transmitted separately to the isolated program execution location of an end user, where they can be implemented to execute functions on the remainder of the data stream with which they are associated. Such program components can be normally resident within the isolated program execution location and need not be downloaded from the external data source each time that external data source is accessed.

The invention also provides a method for operating an end user computer system, which method comprises importing from an external source into the end user system a data stream containing or having associated with it one or more mobile program components which it is desired to execute on the end user computer system, which method comprises:
a. executing the mobile program component(s) within one or more isolated program execution locations selectively isolated from the computers of the end user system so as to interact with data from the end user system and/or from the external source;
b. passing program components which operate in a specified manner and/or the resultant data from such interaction to the end user system via an interface which permits the transmission of data and/or program components, which correspond to specified criteria, to or from specified locations in the end user system and/or in the external source.

Preferably, the program components are operatively associated with the data stream transmitted to the end user system and the method includes the steps of screening the incoming data stream to detect mobile program components present in or associated with that data stream; and a selected some or all of the mobile program components are passed to the isolated program execution location(s) prior to being executed to operate in the desired manner. Preferably, the program components which are passed to the isolated program execution location are selected as those required for the execution of the desired part of the incoming data stream, thus distinguishing the invention from other systems in which the whole of the incoming data stream is down loaded and a selection of the relevant portions made within the end user system.

The invention has been described above in terms of incoming data from a web site. However, it can be applied to incoming data from any other form of external data source, for example e-mail or other message based information transfer systems.
Thus, the invention can be applied to communications between two private network systems or between elements of a single network system, either directly or via an external domain or other server.

The invention has been described above in terms of security provided by a single layer of isolated program execution locations. However, it is within the scope of the present invention to employ two or more layers of the isolated program execution locations whereby only data and/or program components which have been screened by a previous isolated program execution location are passed to a succeeding isolated program execution location for further screening before the program component is allowed to interact with the end user system.
Furthermore, the nature of the operating programs in successive layers can be radically different so that different functions can be achieved in successive layers and program components can be subjected to differing types of security investigation.
Furthermore, the ability to implement more than one mobile program component in a single isolated program execution location gives the operator flexibility in the handling of incoming program components either alone when they reside in separate isolated program execution locations, or in interaction with one another where they co-reside in an isolated program execution location. Since the isolated program execution locations are operated in isolation from the end user system, in the event that a program component within an isolated program execution location operates errantly or is detected as potentially damaging, the isolated program execution location can be viewed as sacrificial and the operator can re-initiate an isolated program execution location in isolation from other isolated program execution locations or the end user system without the need to re-program the whole end user system.

As stated above, the invention can also be used to control the flow of the incoming data stream and to selectively direct part or all of the stream and its associated program components to specific isolated program execution locations. In this way large program components can be identified and selectively directed to an isolated program execution location specifically designated to execute such large program components. The results of the execution of that program component can then be transmitted to the end user system where the terminals of that system need not each have the computing power required to execute the large program component. Alternatively, the invention can be used to selectively direct parts of the data stream and their associated or contained program components to specific isolated program execution locations designated to execute that type of program component. This ability to identify and route selected portions of the incoming data stream before the program components are executed in the isolated program execution location further reduces the need for the end user system administrator to inspect every incoming program components at the entry point to the end user system and allows that inspection to be carried out on a reduced volume of incoming material at a lower level in the end user system.

### DESCRIPTION OF THE DRAWINGS:

The invention will be described by way of illustration only with respect to the preferred embodiment of the invention as shown in the accompanying drawings, in which Figures 1 and 2 show in diagrammatic block form a typical present method of operating an end user system to receive a data stream from an external source; Figures 3 and 4 show a system operated according to the method of the invention; and Figures 5 to 9 show in block diagram form a system operating using JAVA language.

### DESCRIPTION OF THE PRESENT SYSTEM:

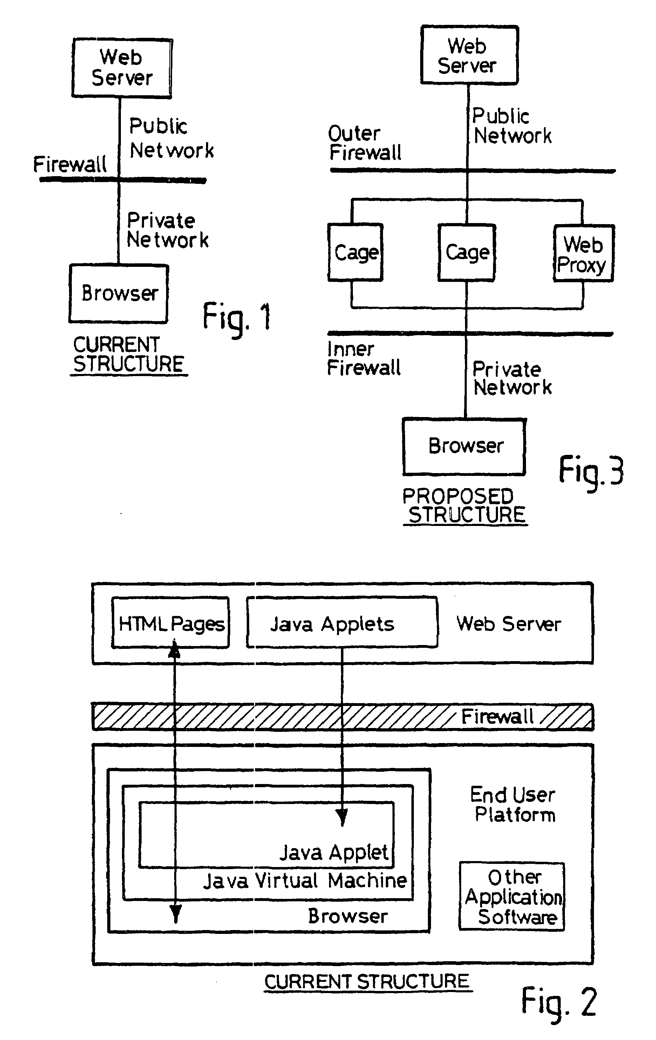

Figure 1 shows a current system for importing data and/or program components from an external source, for example data from a Web server, and comprises a single computer unit or a plurality of computer units in an end user computer system interconnected by a private network, and the Web server connected to the public network. The end user uses a browser or other program held on the end user system to identify the data and/or program components which are to be imported from the Web server. The browser program may be held on any or all of the computer units in the end user network. In order to reduce the risk of importing undesirable material, the access point to the end user system is provided with a firewall which only allows the passage of data and program components from the public network which come from or go to specified addresses in the public network. The browser and/or firewall may also refuse to import program components or data that have not been cryptographically signed and sealed by a known and/or trusted source. It is also customary to hold a virus detection program on the end user system which detects the characteristic patterns of known viruses or changes which such viruses make in programs carried by the end user system.

However, where the data stream from the public network contains mobile program components which it is desirable to execute on the end user system, problems arise in ensuring that the imported material does not contain material which could operate incorrectly or maliciously on the end user system. The firewall will allow such program components to pass since they come from an accepted address. Whilst a firewall may have a measure of intelligence, it operates by identification of the communication address from or to which the data and program components are transmitted. The virus detection program cannot guarantee to detect and de-activate the program components when they operate incorrectly since they may not be recognised as detrimental viruses. As a result, the end user system is vulnerable to importation of errant program components.

Such a problem exists specifically with systems operating using JAVA technology as exemplified by the system shown in Figure 2. The end user, identified as the host platform, carries a browser program which is used to request data from a service provider. This is provided via the network server which transmits a stream of data containing JAVA Applets, which the end user desires to run on the end user system. The JAVA Applets are executed on the end user system via a JAVA Virtual Machine which maintains the interfaces to the end user system via the browser program and to the Web server. However, the browser may incorrectly interpret the Applets or the Applets may accidentally or deliberately contain harmful instructions. At present there is inadequate protection for the end user system from such errant interpretation or harmful instructions.

### DESCRIPTION OF THE PREFERRED EMBODIMENT:

In the method of the invention as shown in Figure 3, data from the public network is not fed directly to the end user but is scanned and any program components within the data stream are diverted into an isolated program execution location, denoted as a cage. The scanning of the incoming data stream to identify program components in it and to divert those to and execute those in the cage can be done by any trusted component located in the path of the data stream, for example a local Web proxy, the browser program, a network router or a dedicated program. The execution cage is typically a conventional commercial computer interfaced between the end user system and the public network.

The execution cage thus acts as a protective screen between the public network and the private network of the end user and by virtue of the program under which it operates selectively and controlledly permits the transmission of data and/or program components which meet specified criteria, for example come from or are addressed to specified locations in the end user system or the external source.

In order to enhance the confidence of a user in the operation of the cage, it is preferred to provide firewalls at the interface between the cage and the end user system and between the cage and the public network. Either or both of these firewalls may be incorporated into the cage if desired. That portion of the overall system shown in Figure 3 downstream of and including the outer firewall is located at the end user site. That portion downstream of and including the inner firewall is the end user system which is protected by the execution cage.

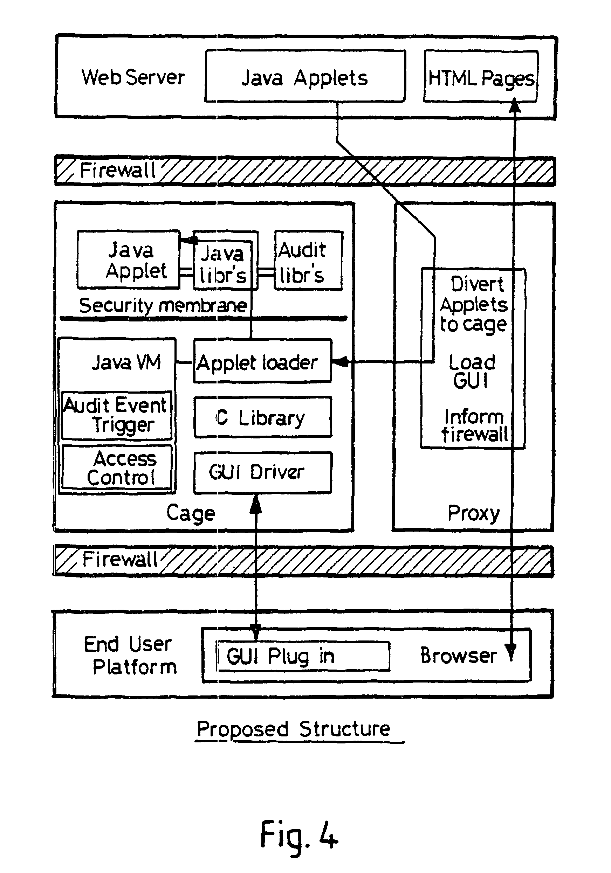

With reference to the system shown diagrammatically in Figure 4, the Applets and other program components are executed within the cage. Data from the end user system and/or from the public network is interacted upon by the program components in the cage and the resultant modified data is transmitted to the end user system via a suitable interface. The interface is programmed to transmit data which satisfies specific access criteria but does not transmit or receive program components or data which does not satisfy the access requirements.
Therefore, the cage retains the program components selectively isolated from or within the end user system and strictly regulates the data which is transmitted to and received by it. As a result, the end user system imports and exports only data which is acceptable. Since the program(s), in this case those operating the JAVA Virtual Machine, which control the operation of the cage can be small, they can be readily inspected. The end user can thus verify the integrity of the program(s) to his satisfaction and can ascertain that the program is clearly and logically constructed and well documented by inspection of the program listing. Those components of the interface between the JAVA Virtual Machine and the public network which regulate the import of the JAVA Applets into the cage are also inspected to ensure the integrity of the operation of the cage.

once within the cage, the Applet is executed under the control of the JAVA Virtual Machine so as to interact with data from the public network and/or the end user system in a controlled manner. In order to contain errant operation of the Applet and prevent it from gaining access to the end user system, some form of access control is provided either in the end user system or in the cage. Such access control can be in the form of an internal firewall. Access control can prevent the Applet from accessing any source or destination other than ones on a list provided by a system administrator. Alternatively, the access control can require positive consent from the browser user before each access request is allowed to proceed. The program components within the cage can be classified into those components which must be inspected and verified in order to ensure the integrity of the cage, and those which can safely be imported and executed under the control of the former. The dividing line between these two sets of program components is known as a security membrane.

The necessary hardware for the cage can be of conventional nature and the operating program(s) can be prepared using conventional programming techniques and algorithms.

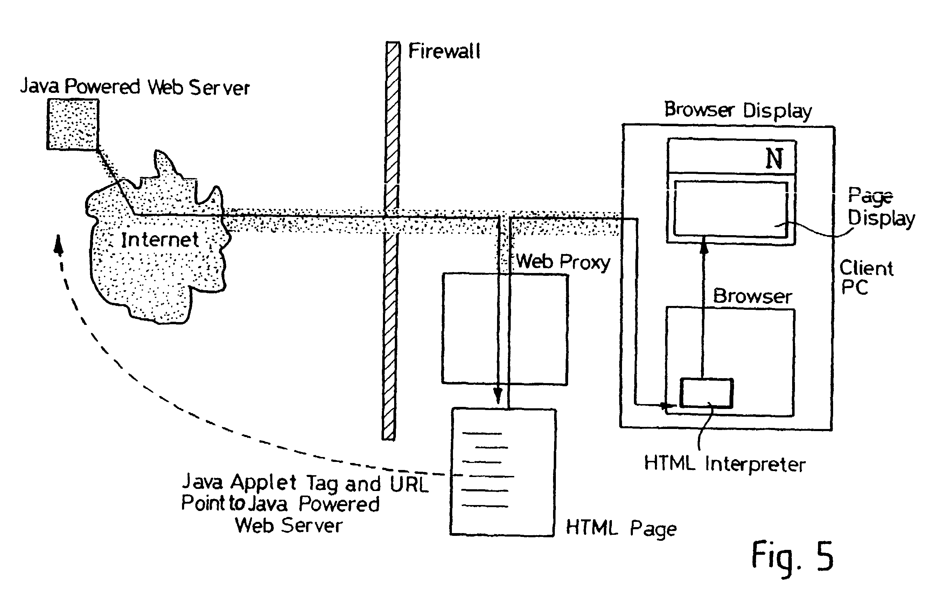

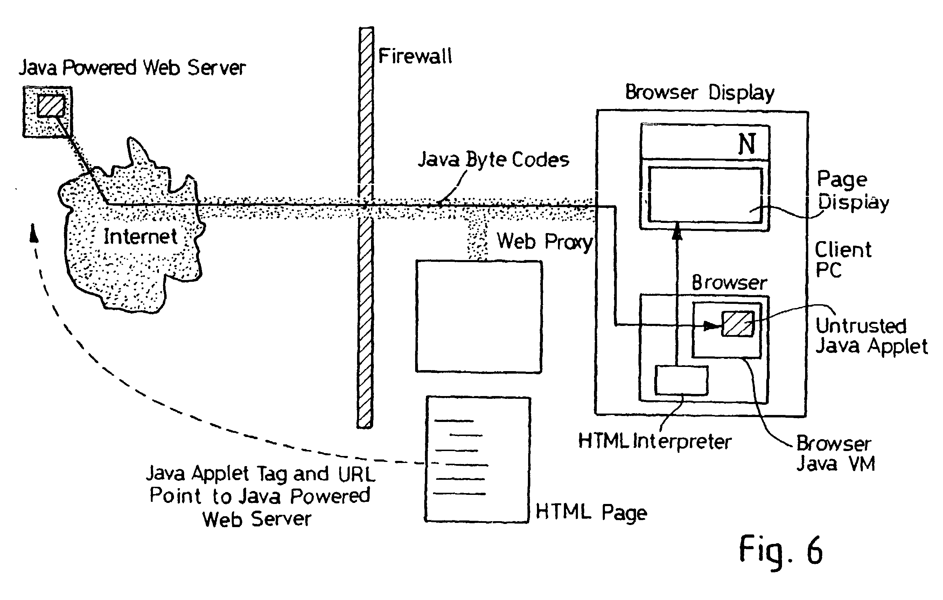

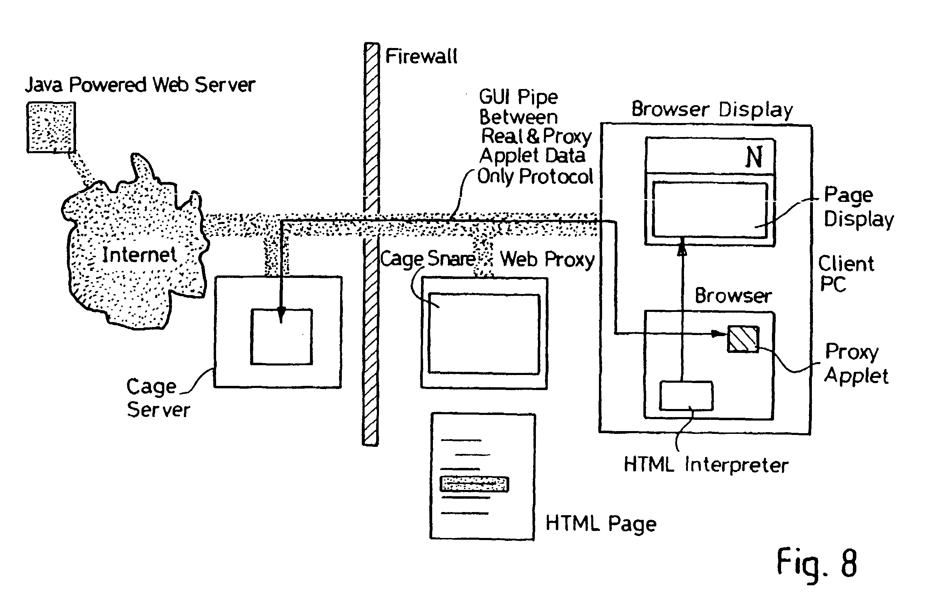

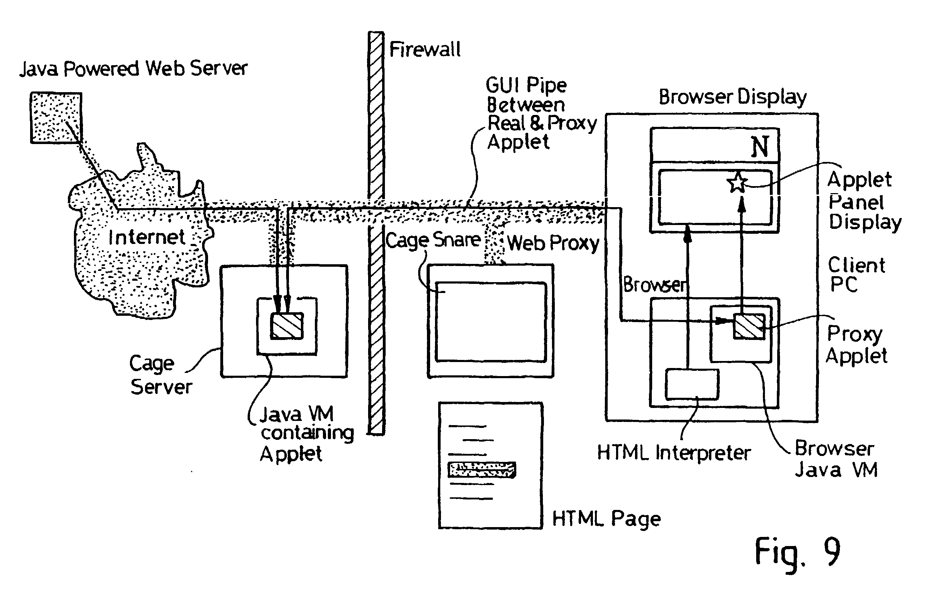

A particularly preferred method of operating the invention with a source of information in the JAVA language is shown in Figures 5 to 9. As shown in Figures 5 and 6, a JAVA powered Web server is accessed by an end user via a firewall, using a browser program. Information from that Web server is downloaded to a Web proxy where the data is held before it is transmitted to the end user system. The incoming information stream contains one or more flags or other identifying features which are recognised by the Web proxy as either identifying the presence of a JAVA Applet in the incoming data stream or identifying the site address in the Web server of a JAVA Applet required to be run on the end user system to display the data from the Web server. In a conventional system, the end user would download the JAVA Applet from the designated site on the Web server directly to the JAVA Virtual Machine in the browser program in the end user PC terminal or other operating unit in the end user system. The JAVA Applet would then be implemented within the end user system to operate on the data held in the Web proxy or in the end user system data store to provide the desired image on the display screen. However, if the Applet does not operate correctly, the end user system has no protection against this since the Applet is operating within the end user system.

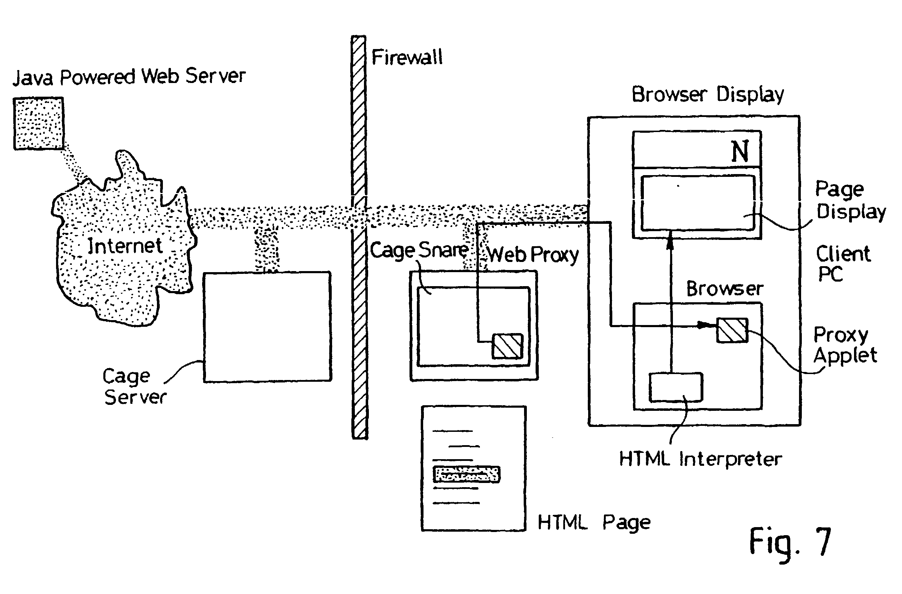

In the system shown in Figures 7 to 9, the isolated program execution location, or Cage server, is located on the public network, shown as the Internet, side of the inner firewall and there is typically another, outer firewall, not shown, located between the Cage server and the public network. The Cage server is typically a computer having processing and memory capacity which receives and interprets program components which it receives from the public network. Located between the inner firewall and the end user operating unit is a Web proxy, which is typically another computer or part of the same computer as the Cage server. The Web proxy receives and stores the data from the public network, designated as the HTML page. The Web proxy preferably contains the program component which identifies the presence of a flag or other indication in the incoming information which identifies the presence and address of an Applet required to interact with the data in the incoming data stream from the public network and/or from the end user data store to give the required display on the end user operating unit.

This snare program component identifies the address of the Applet in the Web server and diverts any incoming Applet to the Cage server where the incoming or real Applet is implemented in isolation from the end user system. The snare program also generates a new or translated address to identify that real Applet to the end user system, which new address corresponds to the address of a proxy Applet held within the browser program in the end user operating unit or PC. The proxy Applet is one which the end user has written or obtained and which has been fully verified so that it can operate safely within the end user system.

When the end user is notified by the browser program that an Applet requires to be downloaded from the Web server, the snare program will be given the new address as the address for that Applet. As a result, the proxy Applet and not the real Applet will be addressed and implemented within the end user system. However, the proxy Applet will interface with the Cage server to download the real Applet from the Web server into the Cage server. The real Applet can now be run within the Cage server in isolation from the end user system and interfaces in a controlled manner via a general utilities interface (GUI) to act upon the environment of the proxy Applet within the end user browser. The real Applet does not download into the end user system as with a conventional browser operation.

Thus, the invention also provides an end user system in which the external data source operates under JAVA or JAVASCRIPT language and the program components which are to be imported and run within the isolated program execution location are Applets. Preferably, the program for operating the isolated program execution location and/or the end user system identifies the address of the Applet to be executed in the isolated program execution location and translates that into a new address corresponding to a proxy Applet held within the end user system and adapted to be implemented within the end user system and to interface with the Applet in the isolated program execution location to implement the latter Applet within the isolated program execution location.

From another aspect, the present invention provides a method of the invention in which the incoming data stream is written in JAVA or JAVASCRIPT language and contains or is associated with one or more Applets to be imported to the isolated program execution location, and the operating program of the isolated program execution location and/or the end user system operating program identifies the address of that Applet and creates a new or translated address for the imported Applet corresponding to the address of a proxy Applet within the end user system, whereby when the end user system is actuated to download the imported Applet it will address and implement the proxy Applet to operate on data in the incoming data stream and/or held in the end user system and will interface with the imported Applet in the isolated program execution location.

## Claims

1. A computer system comprising:
A. An end user system containing one or more computers programmed to operate in response to an imported data stream from an external source, which data stream has one or more mobile program components contained within or associated with that data stream, and
B. At least one program execution location for executing at least one of the said mobile program components and feeding the results of that execution to one or more of the end user system computers, **characterized in that**:
i. the program execution location is selectively isolated from the end user system computer(s); and
ii. some or all of the mobile program components are fed to and/or retained in one or more of the isolated program execution locations prior to being executed in the isolated program execution location to operate in a desired manner; and
iii. the isolated program execution location is one in which one or more of the program components are retained and which has one or more interfaces with the external source of the data stream and one or more interfaces with the end user system computer(s), whereby program component(s) within the isolated program execution location can be executed within the isolated program execution location in isolation from the end user system computers) to interact with the external source of data and/or data and/or a program held by the end user system computer(s); and
iv. the operation of the interface(s) between the isolated program execution location and the end user system computer(s) are programmed so that only data which has been interacted on by the program component(s) within the isolated program execution location in a specified and controlled manner and/or program components which operate in a specified manner can be passed to and from the end user system computer(s).

2. A computer system as claimed in claim 1, **characterized in that** it is programmed to screen the incoming data stream to detect mobile program components present in or associated with that data stream and so that a selected some or all of the mobile program components are passed to one or more of the isolated program execution locations.

3. A computer system as claimed in either of claims 1 or 2, **characterized in that** the isolated program execution location is provided by:a computer located intermediate the external source of the data stream and the downstream end user system, which computer is isolated from the downstream end user system and communicates with that end user system via one or more interfaces whose operation is controlled to permit the passage of data and/or program components in a selective and controlled manner.

4. A computer system as claimed in any one of claims 1 to 3, **characterized in that** the isolated program execution location is programmed to operate with a single source and/or destination of data external to the end user system and to transmit or receive data to or from a single destination within the end user system.

5. A computer system as claimed in any one of claims 1 to 3, **characterized in that** a first isolated program execution location receives a plurality of said mobile program components and identifies the function and/or character of those program components and directs selected ones of said program components to other isolated program execution locations according to the function or character thereof.

6. A computer system as claimed in claim 5, **characterized in that** said other isolated program execution locations are programmed to operate under one or more different regimes to said first isolated program execution location so as to provide different executions of the program components.

7. A computer system as claimed in claim 1, **characterized in that** it is provided with a plurality of isolated program execution locations, each programmed to operate with a different external data source and with a different destination within the end user system.

8. A computer system as claimed in any one of the preceding claims, **characterized in that** the isolated program execution location is provided with one or more firewalls between it and the external source of data and/or the end user system downstream of the isolated program execution location.

9. A computer system as claimed in any one of the preceding claims, **characterized in that** the isolated program execution location is provided with program means adapted to operate program components received from the external source in a specific manner and to permit transmission of solely data and/or program components to the end user system downstream of the isolated program execution location which satisfy specific predetermined criteria.

10. A computer system as claimed in any one of the preceding claims, **characterized in that** the external data source operates under JAVA or JAVASCRIPT technology and the program components which are to be executed within the isolated program execution location are Applets.

11. A computer system as claimed in claim 10, **characterized in that** the program for operating the isolated program execution location and/or the end user system identifies the address of the Applet to be executed in the isolated program execution location and translates that into a new address corresponding to a proxy Applet held within the end user system and adapted to be implemented within the end user system and to interface with the Applet in the isolated program execution location to execute the latter Applet within the isolated program execution location.

12. A computer system as claimed in any one of the preceding claims, **characterized in that** the end user system is a public access service provider.

13. A method for operating an end user computer system, which method comprises importing from an external source into the end user system a data stream containing or having associated with it one or more mobile program components which it is desired to execute on the end user computer system, **characterised in that** the method comprises:
a. executing the mobile program component(s) within one or more isolated program execution locations selectively isolated from the computers of the end user system so as to interact with data from the end user system and/or from the external source;
b. passing program components which operate in a specified manner and/or the resultant data from such interaction to the end user system via an interface which permits the transmission of data and/or program components, which correspond to specified criteria, to or from specified locations in the end user system and/or in the external source.

14. A method as claimed in claim 13 for operating a computer system according to claim 1, **characterized in that**:
a. the incoming data stream is screened to detect mobile program components present in or associated with that data stream; and
b. a selected some or all of the mobile program components are passed to one or more of the isolated program execution locations prior to being executed to operate in a desired manner.

15. A method as claimed in either of claims 13 or 14, **characterized in that** the incoming data stream is written in JAVA or JAVASCRIPT language and contains or is associated with one or more Applets to be imported to the isolated program execution location, and the operating program of the isolated program execution location and/or the end user system operating program identifies the address of that Applet and creates a new or translated address for the imported Applet corresponding to the address of a proxy Applet within the end user system, whereby when the end user system is actuated to download the imported Applet it will address and implement the proxy Applet to operate on data in the incoming data stream and/or held in the end user system and will interface with the imported Applet in the isolated program execution location.

16. An isolated program execution location for use in the computer system of claim 1, **characterized in that** it comprises a computer mechanism adapted to act as an isolating interface between an external source of data and program components and the end user computer system which is to receive or transmit data to and from the computer mechanism, which computer mechanism is programmed to divert and/or retain at least a selected some of the program components from said external source to said computer mechanism and to execute those selected program components within the said computer mechanism and to permit transfer of data and/or program components to said end user system which operate or have been operated on in selected and specified manners.

## Patentansprüche

1. Computersystem mit:
A. einem Endbenuztersystem mit einem oder mehreren Computern, die so programmiert sind, dass sie auf Empfang hin eines importierten Datenstromes von einer externen Quelle operieren, welcher Datenstrom eine oder mehrere mobile in dem Datenstrom enthaltene oder damit verbundene Programmkomponenten aufweist, und
B. mindestens einem Programmausführungsort zum Ausführen mindestens einer der mobilen Programmkomponenten und zum Zuführen der Resultate dieser Ausführung zu einem oder mehreren der Endbenutzersystemcomputer, **dadurch gekennzeichnet, dass**:
i. der Programmauführungsort wahlweise von dem (den) Endbenutzersystemcomputer(n) isoliert ist; und
ii. einige oder alle der mobilen Programmkomponenten vor Ausführung in dem isolierten Programmausführungsort einem oder mehreren der isolierten Programmausführungsorte zugeführt oder darin zurückbehalten werden, um in einer gewünschten Weise zu operieren; und
iii. der isolierte Programmausführungsort einer ist, in welchem eine oder mehrere der Programmkomponenten zurückbehalten werden und welcher eine oder mehrere Schnittstellen zu der externen Quelle des Datenstromes und eine oder mehrere Schnittstellen zu dem (den) Endbenutzersystemcomputer(n) aufweist, wodurch eine oder mehrere der Programmkomponenten innerhalb des isolierten Programmausführungsortes darin in Isolation von dem (den) Endbenutzersystemcomputer(n) ausgeführt werden können, um mit der externen Datenquelle und/oder durch den (die) Endbenutzersystemcomputer gespeicherten Daten und/oder Programm zusammenzuwirken; und
iv. der Betrieb der Schnittstelle(n) zwischen dem isolierten Programmausführungsort und die Endbenutzersystemcomputer so programmiert sind, dass lediglich Daten, auf die durch die Programmkomponente(n) innerhalb des isolierten Programmausführungsortes in einer bestimmten und kontrollierten Weise eingewirkt wurde, und/oder Programmkomponenten, die in einer bestimmten Weise arbeiten, mit dem (den) Endbenutzersystemcomputer(n) ausgetauscht werden können.

2. Computersystem nach Anspruch **1, dadurch gekennzeichnet, dass** es derart programmiert ist, um den eintreffenden Datenstrom zu überprüfen, um mobile Programmkomponenten zu dektieren, die in dem Datenstrom enthalten oder damit verbunden sind, und das einige ausgewählte oder alle mobile Programmkomponenten den einen oder mehreren isolierten Programmausführungsorten zugeführt werden.

3. Computersystem nach Anspruch 1 oder 2, **dadurch gekennzeichnet, dass** die isolierten Programmausführungsorte durch einen zwischen der externen Quelle des Datenstromes und dem darunterliegenden Endbenutzersystem angeordneten Computer geliefert werden, welcher Computer von dem darunterliegenden Endbenutzersystem isoliert ist, und der mit dem Endbenutzersystem über eine oder mehrere Schnittstellen kommuniziert, deren Betrieb so kontrolliert ist, dass der Durchfluß von Daten und/oder Programmkomponenten in einer selektiven und gesteuerten Weise gestattet ist.

4. Computersystem nach einem der Ansprüche 1 bis 3, **dadurch gekennzeichnet, dass** der isolierte Programmausführungsort derart programmiert ist, um mit einer einzigen außerhalb des Endbenutzersystems gelegenen Datenquelle und/oder Datenbestimmung zu arbeiten und um Daten nach einer einzigen Bestimmung innerhalb des Endbenutzersystems zu übertragen, oder Daten von der einzigen Bestimmung innerhalb des Endbenutzersystems zu empfangen.

5. Computersystem nach einem der Ansprüche 1 bis **3, dadurch gekennzeichnet, dass** ein isolierter Programmausführungsort eine Vielzahl von den mobilen Programmkomponenten empfängt und deren Funktion und/oder Charakter identifiziert, und ausgewählte dieser Programmkomponenten an andere isolierte Programmausführungsorte in Abhängigkeit von deren Funktion und deren Charakter richtet.

6. Computersystem nach Anspruch 5, **dadurch gekennzeichnet, dass** die anderen isolierten Programmausführungsorte derart programmiert sind, um unter einem oder mehreren von dem ersten isolierten Programmausführungsort unterschiedlichen Regimes zu arbeiten, um verschiedene Ausführungen der Programmkomponenten bereitzustellen.

7. Computersystem nach Anspruch 1, **dadurch gekennzeichnet, dass** es eine Vielzahl von isolierten Programmausführungsorten ausweist, von welchen jeder derart programmiert ist, um mit einer unterschiedlichen externen Datenquelle und einer unterschiedlichen Bestimmung innerhalb des Endbenutzersystems zu arbeiten.

8. Computersystem nach einem der vorhergehenden Ansprüche, **dadurch gekennzeichnet, dass** der isolierte Programmausführungsort eine oder mehrere Firewalls zwischen sich und der externen Datenquelle und/oder dem Endbenutzersystem unterhalb des isolierten Programmausführungsortes ausweist.

9. Computersystem nach einem der vorhergehenden Ansprüche, **dadurch gekennzeichnet, dass** der isolierte Programmausführungsort Programmmittel aufweist, die zur Ausführung von Programmkomponenten angepaßt sind, die von einer externen Quelle in einer bestimmten Weise empfangen werden, und um die Übertragung lediglich solcher Daten und/oder Programmkomponenten zum unter dem isolierten Programmausführungsort liegenden Endbenutzersystem zu erlauben, die spezifische vorbestimmte Kriterieren befriedigen.

10. Computersystem nach einem der vorhergehenden Ansprüche, **dadurch gekennzeichnet, dass** die externe Datenquelle unter JAVA- oder JAVASCRIPT Technologie arbeitet, und die Programmkomponenten, die innerhalb des isolierten Programmausführungsortes ausgeführt werden, Applets sind.

11. Computersystem nach Anspruch 10, **dadurch gekennzeichnet, dass** das Programm zum Betrieb des isolierten Programmausführungsortes und/oder des Endbenutzersystems die Adresse des in dem isolierten Programmausführungsort auszuführenden Applets identifiziert und in eine neue Adresse übersetzt, die einem Proxy Applet entspricht, dass innerhalb des Endbenutzersystems gespeichert und so angepaßt ist, dass es innerhalb des Endbenutzersystems implementiert ist und mit dem Applet in dem isolierten Programmausführungsort eine Schnittstelle bildet, um letzteren Applet innerhalb des isolierten Programmausführungsortes auszuführen.

12. Computersystem nach einen der vorhergehenden Ansprüche, **dadurch gekennzeichnet, dass** das Endbenutzersystem ein öffentlich zugängiger Serviceprovider ist.

13. Verfahren zum Betrieb eines Endbenutzercomputersystems, mit einem Import eines eine oder mehrere auf dem Endbenutzersystems auszuführenden mobilen Programmkomponenten enthaltenden oder damit verbundenen Datenstromes von einer externen Quelle in das Endbenutzersystem, **gekennzeichnet durch, :**
a. wahlweise von den Computern des Endbenutzersystems isoliertes Ausführen der mobilen Programmkomponente(n) innerhalb der einen oder mehreren Programmausführungsorte, um mit Daten von dem Endbenutzersystem und/oder von der externen Quelle zusammenzuwirken; und
b. Zuführen von Programmkomponenten, die in einer bestimmten Weise arbeiten, und/oder der **durch** ein solches Zusammenwirken resultierenden Daten zu einem Endbenutzersystem über eine Schnittstelle, welche die Übertragung von Daten und/oder Programmkomponenten, die spezifischen Kriterien entsprechen, zu oder von einem bestimmten Ort im Endbenutzersystem und/oder in der externen Quelle gestattet.

14. Verfahren nach Anspruch 13 zum Betrieb eines Computersystems nach Anspruch 1, **dadurch gekennzeichnet, dass**:
a. der eintreffende Datenstrom geprüft wird, um in dem Datenstrom enthaltene und damit verbundene mobile Programmakomponenten zu deketieren; und
b. einige ausgewählte oder alle der mobilen Programmkomponenten vor deren Ausführung einem oder mehreren der isolierten Programmausführungsorte zugeführt werden, um in einer gewünschten Weise zu arbeiten.

15. Verfahren nach Anspruch 13 oder 14, **dadurch gekennzeichnet, dass** der eintreffende Datenstrom in der Sprache JAVA oder JAVESCRIPT geschrieben ist und eine oder mehrere in den isolierten Programmausführungsort zu importierende Applet beinhaltet oder mit diesen verbunden ist, und dass das Betriebsprogramm des isolierten Programmausführungsortes und/oder das Endbenutzersystembetriebsprogramm die Adresse dieses Applets identifiziert und eine neue oder übersetzte Adresse für das importierte Applet schafft, die der Adresse eines Proxy Applet innerhalb des Endbenutzersystems entspricht, wodurch, wenn das Endbenutzersystem zum Laden des importierten Applets betätigt wird, es den Proxy Applet adressieren und implementierten wird, um auf Daten in dem eintreffenden Datenstrom und/oder in dem Endbenutzersystem gespeicherte Daten einzuwirken, und es mit dem importierten Applets in dem isolierten Programmausführungsort eine Schnittstelle bilden wird.

16. Ein isolierter Programmausführungsort für eine Verwendung in dem Computersystem nach Anspruch 1, **dadurch gekennzeichnet, dass** es einen Computermechanismus aufweist, der angepaßt ist, um als eine isolierende Schnittstelle zwischen einer externen Datenquelle und Programmkomponenten und dem Endbenutzersystem, welches Daten von dem bzw, an den Computermechanismus empfangen bzw. übertragen soll, zu wirken, welcher Computermechanismus programmiert ist, um mindestens einige ausgewählte der Programmkomponenten von der externen Quelle zurückzubehalten und/oder zu dem Computermechanismus umzuleiten, und um jene ausgewählten Programmkomponenten innerhalb des Computermechnismus auszuführen, und um ein Übertragen von solchen Daten und/oder Programmkomponenten zu dem Endbenutzersystem zu erlauben, welche in einer ausgewählten und bestimmten Weise arbeiten oder gearbeitet haben.

## Revendications

1. Système d'ordinateur comprenant :
A. un système d'utilisateur final contenant un ou plusieurs ordinateurs programmés pour fonctionner en réponse à un flux de données importé à partir d'une source externe, lequel flux de données possède un ou plusieurs composants mobiles de programme contenus dans ou associés à ce flux de données, et
B. au moins un lieu d'exécution de programme pour exécuter au moins un desdits composants mobiles de programme et pour fournir les résultats de cette exécution à un ou plusieurs ordinateurs de système d'utilisateur final, **caractérisé en ce que** :
i. le lieu d'exécution de programme est sélectivement isolé de l'ordinateur de système d'utilisateur final ; et
ii. certains ou tous les composants mobiles de programme sont fournis et/ou retenus dans un ou plusieurs lieux isolés d'exécution de programme avant d'être exécutés dans le lieu isolé d'exécution de programme pour fonctionner d'une manière voulue ; et
iii. le lieu isolé d'exécution de programme est celui dans lequel un ou plusieurs composants de programmes sont retenus et qui possède une ou plusieurs interfaces avec la source externe de flux de données et une ou plusieurs interfaces avec les ordinateurs de système d'utilisateur final, de sorte qu'un (des) composant(s) de programme dans le lieu isolé d'exécution de programme peut (peuvent) être exécuté(s) dans le lieu isolé d'exécution de programme en étant isolé de l' (des) ordinateur(s) de système d'utilisateur final pour interagir avec la source externe de données et/ou données et/ou programme contenus par l' (les) ordinateur(s) de système d'utilisateur final ; et
iv. le fonctionnement de l' (des) interface(s) entre le lieu isolé d'exécution de programme et le(s) ordinateur(s) de système d'utilisateur final est programmé pour que seulement les données qui ont été extraites par le(s) composants de programme dans le lieu isolé d'exécution de programme d'une manière spécifiée et commandée et/ou des composants de programme qui fonctionnent d'une manière spécifiée puissent être passés vers et à partir de l' (des) ordinateur(s) de système d'utilisateur final.

2. Système d'ordinateur selon la revendication 1, **caractérisé en ce qu'**il est programmé pour filtrer le flux de données entrant pour détecter les composants mobiles de programme présents ou associés au flux de données et pour que ceux ou tous les composants mobiles de programme sélectionnés soient passés à un ou plusieurs lieux isolés d'exécution de programme.

3. Système d'ordinateur selon l'une quelconque des revendications 1 ou 2, **caractérisé en ce que** le lieu isolé d'exécution de programme est fourni par un ordinateur situé entre la source externe du flux de données et le système d'utilisateur final en aval, lequel ordinateur est isolé du système d'utilisateur final en aval et communique avec le système d'utilisateur final via une ou plusieurs interfaces dont le fonctionnement est commandé pour permettre le passage des données et/ou des composants de programme d'une manière sélective et commandée.

4. Système d'ordinateur selon l'une quelconque des revendications 1 à 3, **caractérisé en ce que** le lieu isolé d'exécution de programme est programmé pour fonctionner avec une source unique et ou une destination de données externe au système d'utilisateur final et pour transmettre ou pour recevoir des données vers ou à partir de la destination unique dans le système d'utilisateur final.

5. Système d'ordinateur selon l'une quelconque des revendications 1 à 3, **caractérisé en ce qu'**un premier lieu isolé d'exécution de programme reçoit une pluralité desdits composants mobiles de programme et identifie la fonction et/ou le caractère de ces composants de programme et dirige ceux sélectionnés desdits programmes aux autres lieux isolés d'exécution de programme selon la fonction et le caractère de ceux-ci.

6. Système d'ordinateur selon la revendication 5, **caractérisé en ce que** lesdits autres lieux isolés d'exécution de programme sont programmés pour fonctionner sous un ou plusieurs régimes différents audit premier lieu isolé d'exécution de programme afin de fournir différentes exécutions des composants de programme.

7. Système d'ordinateur selon la revendication 1, **caractérisé en ce qu'**il est pourvu d'une pluralité de lieux isolés d'exécution de programme, chacun programmé pour fonctionner avec une source de données externe différente et avec une destination différente dans le système d'utilisateur final.

8. Système d'ordinateur selon l'une quelconque des revendications précédentes, **caractérisé en ce que** le lieu isolé d'exécution de programme est pourvu d'un ou plusieurs pare-feu entre lui et la source externe de données et/ou le système d'utilisateur final en aval du lieu isolé d'exécution du programme.

9. Système d'ordinateur selon l'une quelconque des revendications précédentes, **caractérisé en ce que** le lieu isolé d'exécution de programme est pourvu d'un moyen de programme adapté pour faire fonctionner des composants de programme reçus de la source externe d'une manière spécifique et pour permettre la transmission de seulement des données et/ou des composants de programme au système d'utilisateur final en aval du lieu isolé d'exécution de programme qui satisfont des critères prédéterminés spécifiques.

10. Système d'ordinateur selon l'une quelconque des revendications précédentes, **caractérisé en ce que** la source de données externe fonctionne dans la technologie JAVA ou JAVASCRIPT et les composants de programme qui sont à exécuter dans le lieu isolé d'exécution de programme sont des Applets.

11. Système d'ordinateur selon la revendication 10, **caractérisé en ce que** le programme pour faire fonctionner le lieu isolé d'exécution de programme et/ou le système d'utilisateur final identifie l'adresse de l'Applet à exécuter dans le lieu isolé d'exécution de programme et traduit en une nouvelle adresse correspondant à l'Applet de proxy contenu dans le système d'utilisateur final et adapté pour être mis en ouvre dans le système d'utilisateur final et pour être interfacé avec l'Applet dans le lieu isolé d'exécution de programme pour exécuter le dernier Applet dans le lieu isolé d'exécution de programme.

12. Système d'ordinateur selon l'une quelconque des revendications précédentes, **caractérisé en ce que** le système d'utilisateur final est un fournisseur de service d'accès public.

13. Procédé pour faire fonctionner un système d'ordinateur d'utilisateur final, lequel procédé comprend l'importation à partir d'une source externe dans le système d'utilisateur final, d'un flux de données contenant ou ayant associé à celui-ci un ou plusieurs composants mobiles de programme que l'on désire exécuter sur le système d'ordinateur d'utilisateur final, **caractérisé en ce que** le procédé comprend :
a. l'exécution de la composante mobile de programme dans un ou plusieurs lieux isolés d'exécution de programme sélectivement à partir des ordinateurs du système d'utilisateur final afin d'interagir avec les données du système d'utilisateur final et/ou à partir de la source externe ;
b. passage des composants de programme qui fonctionnent d'une manière spécifiée et/ou les données résultantes de cette interaction au système d'utilisateur final via une interface qui permet la transmission des données et/ou composantes de programme, qui correspondent à des critères spécifiés, vers ou à partir des lieux spécifiés dans le système d'utilisateur final et/ou dans la source externe.

14. Procédé selon la revendication 13 pour faire fonctionner un système d'ordinateur selon la revendication 1, **caractérisé en ce que** :
a. le flux de données entrant est filtré pour détecter des composants mobiles de programme présents dans ou associés à ce flux de données ; et
b. ceux ou tous les composants mobiles de programme sélectionnés sont passés à un ou plusieurs lieux isolés d'exécution de programme avant d'être exécutés pour fonctionner d'une manière voulue.

15. Procédé selon l'une quelconque des revendications 13 ou 14, **caractérisé en ce que** le flux de données entrant est écrit dans un langage JAVA ou JAVASCRIPT et contient ou est associé à un ou plusieurs Applets à importer sur le lieu isolé d'exécution de programme, et le programme de fonctionnement sur le lieu isolé d'exécution de programme et/ou le programme d'exploitation du système d'utilisateur final identifie l'adresse de cet Applet et crée une nouvelle adresse ou adresse traduite pour l'Applet importée correspondant à l'adresse d'un Applet de proxy dans le système d'utilisateur final, pour que lorsque le système d'utilisateur final est actionné pour télécharger l'Applet importée, il aborde et mette en ouvre l'Applet de proxy pour fonctionner sur des données dans le flux de données entrant et/ou maintenu dans le système d'utilisateur final et interface l'Applet importé dans le lieu isolé d'exécution de programme.

16. Lieu isolé d'exécution de programme destiné à être utilisé dans le système d'ordinateur selon la revendication 1, **caractérisé en qu'**il comprend un mécanisme d'ordinateur adapté pour agir comme une interface d'isolation entre une source externe de données et des composants de programme et le système d'ordinateur d'utilisateur final qui est pour recevoir ou transmettre des données vers et à partir du mécanisme d'ordinateur, lequel mécanisme d'ordinateur est programmé pour dériver et/ou retenir au moins ceux des composants de programme sélectionnés à partir de ladite source externe vers ledit mécanisme d'ordinateur et pour exécuter les composants de programme sélectionnés dans ledit mécanisme d'ordinateur et pour permettre le transfert des données et/ou des composants de programme audit système d'utilisateur final qui fonctionnent ou doivent fonctionner selon des manières sélectionnées et spécifiées.
